# EUROPÄISCHE PATENTSCHRIFT

(11) **EP 1 418 348 B1**
(45) Veröffentlichungstag und Bekanntmachung des Hinweises auf die Patenterteilung: **08.03.2006**
(21) Anmeldenummer: 03024849.6
(22) Anmeldetag: 31.10.2003
(51) Int. Cl.: F16C 11/06

(54) **Kugelzapfen**
Spherical gudgeon
Pivot sphérique

(30) Priorität: 05.11.2002 DE 10251783
(43) Veröffentlichungstag der Anmeldung: 12.05.2004
(73) Patentinhaber: ZF Lemförder Metallwaren AG, 49448 Lemförde (DE)
(72) Erfinder: Budde, Frank, 49401 Damme (DE); Wolf, Georg, 49080 Osnabrück (DE)

(56) Entgegenhaltungen:
- DE-A1- 3 518 615
- US-A- 3 023 038
- US-A- 3 376 633
- US-A- 4 187 709

## Beschreibung

Die vorliegende Erfindung betrifft einen Kugelzapfen für ein Gelenk sowie ein Verfahren zum Herstellen eines solchen Kugelzapfens.

Ein Kugelgelenk besteht im Allgemeinen aus einem Gelenkgehäuse, einem Kugelzapfen, einer Gleitschale, in der der Kugelkopf des Kugelzapfens gleitet und einem Verschlussmechanismus; der ein Ausknüpfen des Kugelzapfens aus dem Gelenkgehäuse verhindert. Die Kipp- und Drehmomente des Gelenkes werden durch die Paarung der Gleitpartner beeinflusst, wobei zur Verringerung des Verschleißes des Gelenks eine glatte Oberfläche des Kugelkopfes wichtig ist. Entsprechend unterschiedlicher Anforderungen an Gewicht und Belastbarkeit, gibt es unterschiedliche Ausführungen von Kugelzapfen.

Für hochbelastbare Kugelgelenke werden meist einteilige Kugelzapfen aus Stahl verwendet, bei denen der Kugelkopf an den Kugelzapfenhals angeformt und mit hohem Aufwand poliert wird, um eine glatte Oberfläche zu erhalten.

Kugelzapfen für gering belastete Gelenke, wie zum Beispiel für Pendelstützen mit geringen Auszugskräften und geringen statischen und/oder dynamischen Lasten, können aus zwei Teilen hergestellt werden. In einer Ausführung wird hierbei ein zum Schutz vor Korrosion beschichteter Stählzapfen in eine Stahlkugel eingepresst. Dieser Kugelzapfen ist aufgrund der genau einzuhaltenden Toleranzen für Zapfen und Kugel relativ teuer. Kostengünstiger ist die Ausführung eines Kugelzapfens mit einem Kunststoffkugelkopf, da der Kunststoff eine geringere Dichte aufweist und im Großserienverfahren z.B. durch Anspritzen aufgebracht bzw. vorgefertigt werden kann.

Die DE 18 18 602 U1 schlägt vor, den Kunststoffkugelkopf direkt auf ein verdicktes Ende eines metallischen Kugelzapfenhalses aufzugießen oder den Kugelzapfenhals unter Spannung in einer mit einer komplementär zu dem verdickten Ende des Kugelzapfenhalses vorgeformten Höhlung des Kunststoffkugelkopfes einzusetzen.

Jedoch kommt es beim Einsatz von zur Übertragung großer Kräfte verstärkten Kunststoffen durch die Faserorientierung und das Schwingungsverhalten der Kunststoffe zu Verzug und Einfallstellen. Des weiteren kann durch die Faserverstärkung, insbesondere bei einer Verstärkung mit Glasfasern, auf dem Gleitpartner erhöhter Verschleiß auftreten.

Es ist Aufgabe der vorliegenden Erfindung einen kostengünstig herzustellenden Kugelzapfen für ein Gelenk mit guten tribologischen Eigenschaften, einer genauen Oberfläche und Kontur sowie ein Verfahren zur Herstellung eines solchen Kugelzapfens anzugeben.

Diese Aufgabe wird gemäß den Merkmalen der unabhängigen Ansprüche gelöst. Vorteilhafte Weiterbildungen der Erfindung ergeben sich aus den abhängigen Ansprüchen.

Somit besteht die äußere Schicht zumindest des Kugelkopfes des Kugelzapfens aus einem blasgeformten Kunststoff. Hierdurch werden eine hohe Oberflächengüte und gute tribologische Eigenschaften des Kugelkopfes des Kugelzapfens erzielt. Der hohle, blasgeformte Kugelkopf kann zur Verbesserung seiner mechanischen Eigenschaften mit einem aushärtenden Werkstoff befüllt werden. Die Füllung des Kugelkopfes kann hierbei gleichzeitig zur Befestigung des Zapfens dienen, wobei hierzu an dem Kugelzapfenhals ein Hinterschnitt, der in den gefüllten Kugelkopf hineinreicht, angeformt wird. Eine Befestigung des Kugelkopfes auf dem Kugelzapfenhals ist auch mittels in axialer Richtung des Kugelzapfens an dem Kugelkopf angeformten Gewinde und/oder Sclinapphaken möglich.

Bei dem Blasformen wird der Kugelkopf aus einem Vorformling aus Kunststoff in einem Hohlwerkzeug aufgeblasen. Es ist ebenfalls möglich den gesamten Kugelzapfen mittels Blasformen herzustellen und mit einem aushärtenden Werkstoff zu füllen. Der Vorformling kann durch Spritzgießen oder von einem extrudierten thermoplastischen Schlauchabschnitt, dessen eine Seite vor dem Blasformen durch Abquetschen verschlossen wird, hergestellt werden. Bei dem Spritzgießen des Vorformlings des Kugelzapfen ist es möglich, in axialer Richtung ein Gewinde und/oder Schnapphaken als Befestigungsmittel anzuformen. Mit dem erfindungsgemäßen Verfahren lassen sich kostengünstig Kugelzapfen mit sehr guter Geometrie und geringen Toleranzen für geringe Momente im Gelenk in hohen Stückzahlen fertigen.

Die vorliegende Erfindung wird in der folgenden Beschreibung anhand der beigefügten Figuren näher erläutert, in denen zeigen:
Fig. 1a, 1b und 1c in drei Verarbeitungsschritten ein Beispiel des erfindungsgemäßen Verfahrens zur Herstellung eines Kugelzapfens,
Fig. 2a, 2b und 2c in drei Verarbeitungsschritten ein weiteres Beispiel des erfindungsgemäßen Verfahrens zur Herstellung eines Kugelzapfens, und
Fig. 3 ein Beispiel des erfindungsgemäßen Kugelzapfens.

In den Figuren sind wesensgleiche Elemente verschiedener Ausgestaltung mit gleichen Bezugszeichen aber hochgestellten Strichen gekennzeichnet.

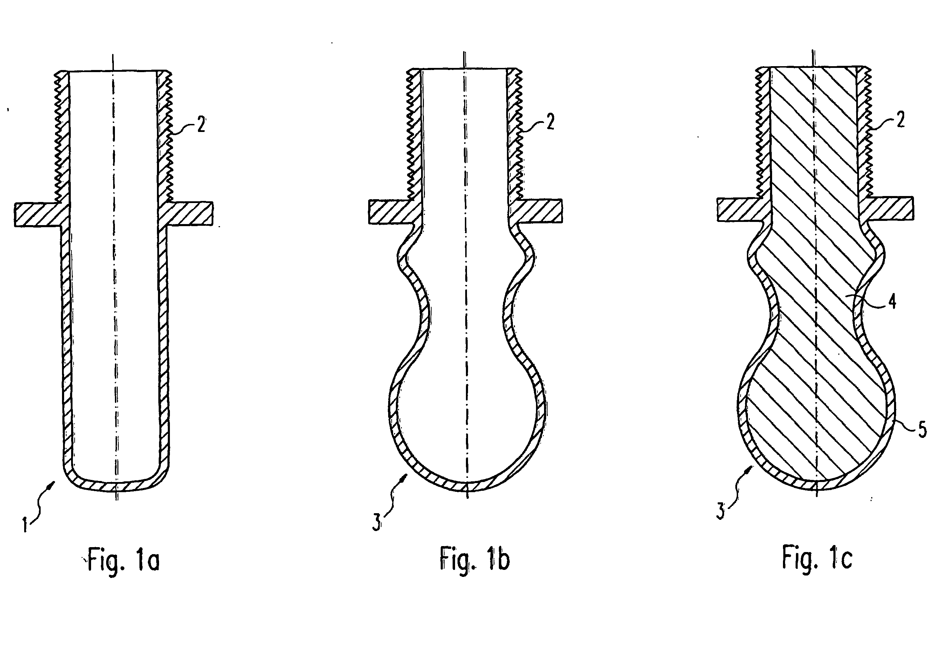

Die Technologie des Blasformens ist bekannt und wird zum Beispiel bei der Produktion von Kunststoffflaschen eingesetzt. In den in Fig. 1a bis 1c gezeigten Schritten erfolgt die Herstellung des erfindungsgemäßen Kugelzapfens mit dem Spritzblasverfahren. Hierbei wird in einem ersten Schritt der in Fig. 1a gezeigte höhle Vorformling 1 aus Kunststoff in einem Spritzgießwerkzeug hergestellt. Am Vorformling 1 ist bereits ein Gewinde 2 (oder Schnapphaken) zur späteren Befestigung des Kugelzapfens angeformt. Als Kunststoffe können Thermoplaste wie zum Beispiel Polyamid (PA), Polyoxymethylen (POM) oder Polyetheretherketon (PEEK) verwendet werden. In einem zweiten Schritt wird der erwärmte Vorformling 1 in ein Blaswerkzeug eingesetzt und aufgeblasen. Der Vorformling 1 nimmt nun allmählich die Kontur der Innenhöhlung des Werkzeuges, entsprechend der gewünschten Form des Kugelzapfens, an. Fig. 1b zeigt den fertig geblasenen hohlen Kugelzapfen 3. Der obere Teil des Kugelzapfens 3 mit dem Gewinde 2 ist gegenüber dem Vorformling 1 unverändert. Zur Verbesserung der mechanischen Eigenschaften des Kugelzapfen 3 wird der Kugelkopf 5 und der übrige Höhlraum des Kugelzapfens 3, wie in Fig. 1c gezeigt, mit einem aushärtenden Material 4, wie zum Beispiel Beton, Keramik und/öder Duroplast, befüllt.

Mit dem erfindungsgemäßen Verfahren können Kugelzapfen unterschiedlicher Form mit einer hohen Präzision hergestellt werden, wobei der Materialeinsatz des eingesetzten Kunststoffs gering ist. Es entstehen bei der Herstellung keine Schweiß- oder Bindenähte, die nachträglich bearbeitet werden müssen, kein Abfall und nur minimale Gewichts- und Volumenschwankungen. Der Kugelzapfen 3 ist nicht anfällig für Korrosion, ist leicht und weist eine exakte Wanddicke auch bei geringen Wandstärken auf. Die Verstreckung der Polymermoleküle beim Blasformen bewirkt eine Verbesserung der mechanischen Eigenschaften der verwendeten Kunststoffe. Durch eine geeignete Auswahl der Paarung der Kunststoffe von Kugelzapfen 3 und Kugelschale im Gelenk kann die Trockenreibzahl und der Stick-Slip-Effekt, der bei Kuhststoff-Stahl-Paarungen auftritt, verringert werden. Das zweiteilige Verfahren ist zudem besonders flexibel, da Vorformling 1 und Kugelzapfen 3 an unterschiedlichen Orten hergestellt werden können und sich ein getrenntes System besser optimieren lässt.

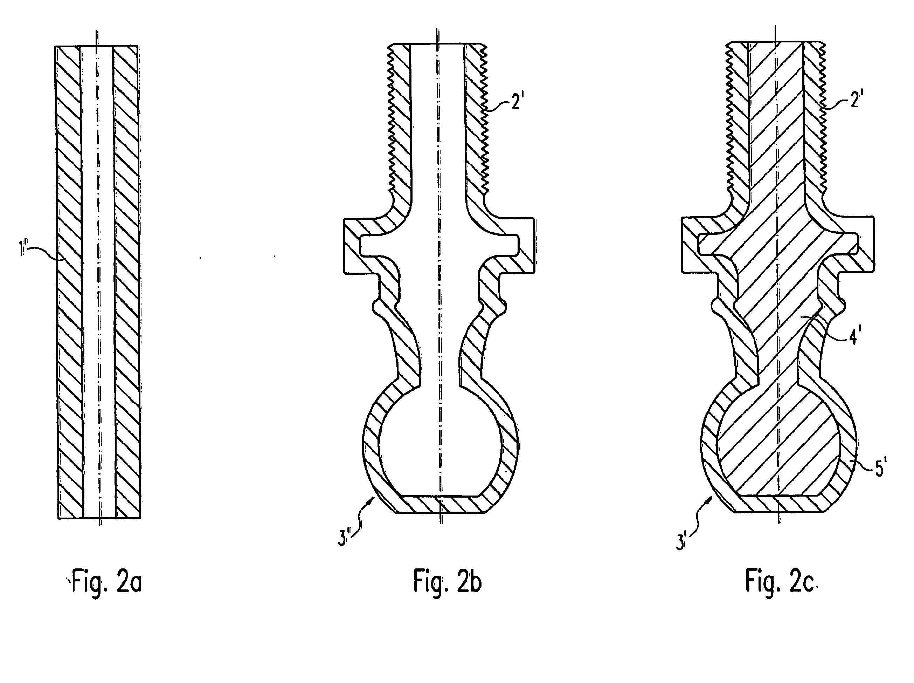

In den in Fig. 2a bis 2c gezeigten Schritten erfolgt die Herstellung des erfindungsgemäßen Kugelzapfens 3' in einem einstufigen Prozess durch das Extrusionsblasformen. Fig. 2a zeigt den Vorformling 1', einen heißen extrudierten thermoplastischen Schlauchabschnitt, der in ein zweiteiliges offenes Hohlwerkzeug gebracht wird. Sodann werden die Werkzeughälften geschlossen, wobei die untere Seite des Schlauchabschnitt durch Abquetschen verschlossen wird. Der Vorformling 1' wird aufgeblasen und nimmt die Kontur der Innenhöhlung des Werkzeuges, also die gewünschten Form des Kugelzapfens 3', an. Wie in Fig. 2b gezeigt, erfolgt bei diesem Verfahren die Formung des Gewindes 2' am oberen Teil des kugelzapfens 3' erst beim Aufblasen des Vorformlings 1'. Gleich dem in Fig. 1c gezeigten Kugelzapfen 3, kann der Kugelkopf 5' und der übrige Hohlraum im Kugelzapfen 3' zur Verbesserung der mechanischen Eigenschaften mit einem aushärtenden Material 4' befüllt werden (Fig. 2c), wie es bereits in Bezug auf Fig. 1c erläutert wurde.

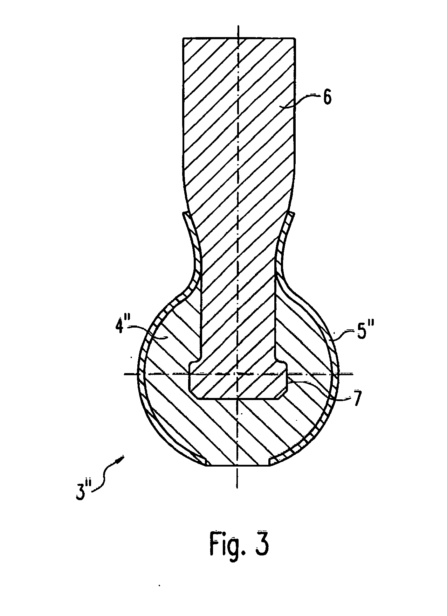

In dem in Fig. 3 gezeigten Beispiel besteht der erfindungsgemäße Kugelzapfen 3" aus einem metallischen Zapfen 6, der in ein mittels Blasformen hergestellten Kunststoffkugelkopf 5" eingelegt, positioniert oder geschnappt ist. Der Kugelkopf 5" ist mit einem aushärtenden Material 4" gefüllt, wobei der Kugelzapfenhals mit einem angeformten Hinterschnitt 7, der in den gefüllten Kugelkopf 5" hineinreicht, in dem Kugelkopf 5" verankert ist. Analog zu den vorangegangenen Beispielen können an dem Kugelkopf 5" ein Gewinde und/oder Schnapphaken angeformt sein (nicht gezeigt), mittels derer der Kugelkopf 5" auf dem Kugelzapfenhals aufgeschraubt bzw. aufgeschnappt wird.

Es ist auch möglich an einem geblasenen Kugelzapfen 3, 3', 3" oder einem geblasenen Kugelkopf 5 ein Gewinde nachträglich anzuspritzen oder zwei geblasene Kugelzapfen 3, 3', 3" zu einer Pendelstütze umzuspritzen.

### Bezugszeichenliste

- 1, 1', 1": Vorformling
- 2, 2': Gewinde
- 3, 3', 3": Kugelzapfen
- 4, 4', 4": Füllung mit aushärtenden Werkstoff
- 5, 5', 5": Kugelkopf
- 6: metallischer Zapfen
- 7: am Kugelzapfenhals angeformter Hinterschnitt

## Patentansprüche

1. Kugelzapfen für ein Gelenk, **dadurch gekennzeichnet, dass** die Oberfläche des Kugelkopfes (5, 5', 5") des Kugelzapfens (3) aus einem blasgeformten Kunststoff besteht.

2. Kugelzapfen nach Anspruch 1, **dadurch gekennzeichnet, dass** der Kugelkopf (5, 5', 5") mit einem aushärtenden Werkstoff (4, 4', 4") befüllt ist.

3. Kugelzapfen nach Anspruch 2, **dadurch gekennzeichnet, dass** an dem Kugelzapfenhals ein Hinterschnitt (7), der in den gefüllten Kugelkopf (5") hineinreicht, angeformt ist.

4. Kugelzapfen nach einem der Ansprüche 1 bis 3, **dadurch gekennzeichnet, dass** an dem Kugelkopf (5") in axialer Richtung des Kugelzapfens ein Gewinde und/oder Schnapphaken angeformt sind, mittels derer der Kugelkopf (5") auf dem Kugelzapfenhals befestigt ist.

5. Kugelzapfen nach Anspruch 1, **dadurch gekennzeichnet, dass** die gesamte Oberfläche des Kugelzapfens (3, 3') aus einem blasgeformten Kunststoff besteht.

6. Kugelzapfen nach Anspruch 5, **dadurch gekennzeichnet, dass** der Kugelzapfen (3, 3') mit einem aushärtenden Werkstoff befüllt ist.

7. Kugelzapfen nach Anspruch 5 oder 6, **dadurch gekennzeichnet, dass** an dem Kugelzapfen (3, 3') in axialer Richtung ein Gewinde (2, 2') und/oder Schnapphaken als Befestigungsmittel angeformt sind.

8. Verfahren zum Herstellen von Kugelzapfen für Gelenke, **dadurch gekennzeichnet, dass** der Kugelzapfen (3, 3') aus einem Vorformling (1, 1') aus Kunststoff in einem Hohlwerkzeug blasgeformt wird.

9. Verfahren nach Anspruch 8. **dadurch gekennzeichnet, dass** der Vorformling (1) durch Spritzgießen hergestellt wird.

10. Verfahren nach Anspruch 9, **dadurch gekennzeichnet, dass** an dem Vörförmling (1, 1') des Kugelzapfens (3, 3') in axialer Richtung ein Gewinde (2) und/oder Schnapphaken als Befestigungsmittel angeformt werden.

11. Verfahren nach Anspruch 8, **dadurch gekennzeichnet, dass** der Vorformling (1') ein extrudierter thermoplastischer Schlauchabschnitt ist, dessen eine Seite vor dem Blasformen durch Abquetschen verschlossen wird.

12. Verfahren nach einem der Ansprüche 8 bis 11, **dadurch gekennzeichnet, dass** der blasgeformte Kugelzapfen (3, 3') mit einem aushärtenden Werkstoff (4, 4') gefüllt wird.

## Claims

1. Ball pin for a joint, **characterised in that** the surface of the ball head (5, 5', 5") of the ball pin (3) consists of a blow-moulded plastics material.

2. Ball pin according to claim 1, **characterised in that** the ball head (5, 5', 5") is filled with a hardening material (4, 4', 4").

3. Ball pin according to claim 2, **characterised in that** an undercut (7) which extends into the filled ball head (5") is formed on the ball pin neck.

4. Ball pin according to any one of claims 1 to 3, **characterised in that** a thread and/or snap fastening is formed on the ball head (5") in the axial direction of the ball pin, by means of which the ball head (5") is attached to the ball pin neck.

5. Ball pin according to claim 1, **characterised in that** the entire surface of the ball pin (3, 3') consists of a blow-moulded plastics material.

6. Ball pin according to claim 5, **characterised in that** the ball pin (3, 3') is filled with a hardening material.

7. Ball pin according to claim 5 or 6, **characterised in that** a thread (2, 2') and/or snap fastening are formed in an axial direction on the ball pin (3, 3') as attachment means.

8. Method for producing ball pins for joints, **characterised in that** the ball pin (3, 3') is blow-moulded from a preform (1, 1') of plastics material in a hollow die.

9. Method according to claim 8, **characterised in that** the preform (1) is produced by injection moulding.

10. Method according to claim 9, **characterised in that** a thread (2) and/or snap fastening are formed in an axial direction on the preform (1, 1') of the ball pin (3, 3') as attachment means.

11. Method according to claim 8, **characterised in that** the preform (1') is a length of extruded thermoplastic tube, one end of which is closed off by squeezing before blow moulding.

12. Method according to any one of claims 8 to 11, **characterised in that** the blow-moulded ball pin (3, 3') is filled with a hardening material (4, 4').

## Revendications

1. Axe de rotule pour une articulation, **caractérisé en ce que** la surface de la tête sphérique (5, 5' , 5") de l'axe de rotule (3) est faite d'une matière plastique moulée par soufflage.

2. Axe de rotule selon la revendication 1, **caractérisé en ce que** la tête sphérique (5, 5', 5") est remplie d'une matière durcissable (4, 4', 4").

3. Axe de rotule selon la revendication 2, **caractérisé en ce qu'**une partie contre-dépouillée (7) est conformée sur le col de l'axe de rotule et s'étend jusque dans la tête sphérique remplie (5").

4. Axe de rotule selon l'une des revendications 1 à 3, **caractérisé en ce qu'**un filetage et/ou des crans d'enclenchement sont conformés sur la tête sphérique (5"), dans le sens axial de l'axe de rotule, au moyen desquels la tête sphérique (5") est fixée sur le col de l'axe de rotule.

5. Axe de rotule selon la revendication 1, **caractérisé en ce que** toute la surface de l'axe de rotule (3, 3') est faite d'une matière plastique moulée par soufflage.

6. Axe de rotule selon la revendication 5, **caractérisé en ce que** l'axe de rotule (3, 3') est rempli d'une matière durcissable.

7. Axe de rotule selon la revendication 5 ou 6, **caractérisé en ce qu'**un filetage (2, 2') et/ou des crans d'enclenchement sont conformés sur l'axe de rotule (3, 3'), dans le sens axial, pour servir de moyens de fixation.

8. Procédé de fabrication d'axes de rotules pour articulations, **caractérisé en ce que** l'axe de rotule (3, 3') est moulé par soufflage dans un outillage creux, à partir d'une ébauche préformée (1, 1') en matière plastique.

9. Procédé selon la revendication 8, **caractérisé en ce que** l'ébauche préformée (1) est fabriquée par moulage par injection.

10. Procédé selon la revendication 9, **caractérisé en ce qu'**un filetage (2) et/ou des crans d'enclenchement sont conformés sur l'ébauche préformée (1, 1') de l'axe de rotule (3, 3'), dans le sens axial, pour servir de moyens de fixation.

11. Procédé selon la revendication 8, **caractérisé en ce que** l'ébauche préformée (1') est un tronçon de tube flexible thermoplastique extrudé dont un bout a été fermé par écrasement avant l'opération de moulage par soufflage.

12. Procédé selon l'une des revendications 8 à 11, **caractérisé en ce que** l'axe de rotule (3, 3') moulé par soufflage est rempli d'une matière durcissable (4, 4').
